# FASCICULE DE BREVET EUROPEEN

(11) **EP 3 146 700 B1**
(45) Date de publication et mention de la délivrance du brevet: **12.09.2018**
(21) Numéro de dépôt: 15732772.7
(22) Date de dépôt: 18.05.2015
(51) Int. Cl.: H04L 29/06, H04W 8/18

(54) **PROCÉDÉ DE MODIFICATION DE PROFIL, DISPOSITIF ET MICROCIRCUIT ASSOCIÉS**
VERFAHREN, GERÄT, UND MIKROSCHALTKREISE FÜR PROFILÄNDERUNG
METHOD, DEVICE, AND MICROCIRCUIT FOR PROFILE MODIFICAITON

(30) Priorité: 19.05.2014 FR 1454468
(43) Date de publication de la demande: 29.03.2017
(73) Titulaire: IDEMIA France, 92700 Colombes (FR)
(72) Inventeur: WOZNIAK, Tomasz, 92700 Colombes (FR); DUMOULIN, Jérôme, 92700 Colombes (FR); MICHEL, Alexis, 92700 Colombes (FR); DANREE, Arnaud, 92700 Colombes (FR)
(74) Mandataire: Jacobacci Coralis Harle
(86) Numéro de dépôt international: PCT/FR2015/051285
(87) Numéro de publication internationale: WO 2015/177445

(56) Documents cités:
- US-A1- 2007 104 182
- US-B1- 8 538 374

## Description

### DOMAINE TECHNIQUE AUQUEL SE RAPPORTE L'INVENTION

La présente invention concerne les communications sur un réseau de télécommunication utilisant des données de connexion associées à un profil.

Elle concerne plus particulièrement un procédé de modification de profil. L'invention s'applique particulièrement avantageusement dans le cas où une situation critique, telle qu'une situation d'urgence initiée par un appel d'urgence, est en cours lorsque la modification de profil (par exemple un basculement de profil) est demandée.

### ARRIERE-PLAN TECHNOLOGIQUE

La demande de brevet US 2013/165 073 décrit un procédé de modification de profil dans un dispositif comprenant un module de communication sur un réseau de communication. Le dispositif est notamment équipé d'une carte à microcircuit qui mémorise des premières et secondes données de connexion au réseau de télécommunication respectivement associées à un premier profil et à un second profil.

On connaît par ailleurs des dispositifs conçus pour émettre un appel d'urgence, initié manuellement ou automatiquement, à destination d'un centre d'appel d'urgence, tel que décrit par exemple dans le document US 2009/253 403.

On connait également du document US 8 538 374 un système et une méthode pour offrir des communications d'urgence utilisant des profils d'urgence préconfigurés.

### OBJET DE L'INVENTION

Dans ce contexte, la présente invention propose un procédé de modification de profil tel que présenté ci-dessus, comprenant les étapes suivantes :
- réception, par le microcircuit et via le module de communication, d'une demande visant la désactivation du profil ;
- émission par le microcircuit d'un premier message à destination du dispositif ;
- émission, par le dispositif et à destination du microcircuit, d'une réponse indicative de l'existence d'une situation critique ;
- suite à la réception de ladite réponse par le microcircuit, mise en place d'un mécanisme de temporisation ;
- à expiration de la temporisation, émission, par le microcircuit et à destination du dispositif, d'un second message entraînant la désactivation du profil.

La désactivation du profil est donc réalisée après un laps de temps déterminé par la temporisation.

Pendant ce laps de temps (qui correspond en général au moins à la durée de la situation critique), le profil est donc toujours actif et, dans le cas d'une situation d'urgence, le centre d'appel d'urgence peut par exemple toujours émettre un appel à destination du dispositif ; en effet, le dispositif est identifié au niveau du centre d'urgence par les données de connexion (associées au profil, par exemple un numéro de téléphone) du fait que l'appel d'urgence a été réalisé avec ce profil.

Par ailleurs, la situation critique ayant disparu au moment de la désactivation du profil, cette désactivation ne sera pas problématique.

Les données de connexion sont par exemples des premières données de connexion et le profil est par exemple un premier profil. La modification de profil peut dans ce cas être un basculement de profil. La désactivation du (premier) profil correspond dans ce cas à l'activation du second profil.

On remarque que, dans ce cas en particulier, la temporisation met en attente le second message qui vise l'activation du second profil. On évite ainsi notamment des tentatives inutiles d'activation du profil qui alourdiraient les échanges entre le dispositif et le microcircuit, alors que l'on souhaite au contraire bénéficier pleinement de la capacité de ces éléments tout au long de la situation critique (par exemple une situation d'urgence).

En variante, la modification de profil peut être une mise à jour du profil ou un effacement du profil (incluant éventuellement un effacement des données de connexion associées au profil).

Comme déjà indiqué, la situation critique est par exemple une situation d'urgence, telle qu'une situation d'urgence initiée par un appel du dispositif (au moyen de son module de communication) à destination d'un centre d'urgence. En variante, il peut s'agir d'une situation dans laquelle on souhaite réduire la consommation d'énergie par le dispositif, par exemple lorsque le dispositif est équipé de moyens de stockage d'énergie électrique (par exemple une batterie) et que le niveau d'énergie électrique stockée est inférieur à un seuil.

On peut prévoir que la réponse indicative de l'existence d'une situation critique contienne une donnée représentative d'une durée restante de la situation critique, durée restante (exprimée par exemple en nombre de secondes) déterminée par exemple par le dispositif. Selon un mode de réalisation envisageable, cette durée restante est déterminée par différence entre l'émission de l'appel d'urgence par le dispositif et la réception du premier message par le dispositif.

Selon un premier mode de réalisation, le premier message est une commande proactive d'interrogation sur l'existence d'une situation critique.

Dans ce cas, le microcircuit vérifiant au préalable l'existence ou non d'une situation critique, il ne met pas immédiatement en oeuvre une étape de préparation de la modification de profil, mais seulement après expiration de la temporisation.

Selon un second mode de réalisation, le premier message est une demande de mise à jour des informations du microcircuit utilisées par le dispositif, par exemple une commande de type "*REFRESH*" définie par la spécification technique ETSI TS 102 223.

Dans ce cas, on peut prévoir qu'une étape de préparation de la modification de profil soit mise en oeuvre par le microcircuit à réception de la demande de désactivation du (premier) profil, le microcircuit n'ayant pas à ce moment connaissance de l'existence de la situation critique. La réponse indicative de l'existence d'une situation critique peut alors être un message de rejet de la demande de mise à jour, par exemple un message de type FETCH ou TERMINAL RESPONSE défini dans la spécification technique ETSI TS 102 223 et indicatif du rejet de la demande de mise à jour.

On peut prévoir que le procédé comprenne par ailleurs une étape d'émission, par le microcircuit et à destination d'un serveur de gestion du réseau de communication, d'un message de notification de la situation critique, lequel message de notification comprend éventuellement une donnée représentative de ladite durée restante. Le serveur de gestion du réseau de communication est par exemple l'entité qui a émis, au préalable, la demande visant la désactivation du profil déjà mentionnée.

Selon une première possibilité (compatible avec le premier mode de réalisation comme avec le second mode de réalisation), le mécanisme de temporisation est un compteur déclenché par le serveur de gestion du réseau de communication à réception du message de notification. Ce compteur est par exemple initialisé à la valeur représentée par la donnée comprise dans le message de notification.

On prévoit par exemple dans ce cas qu'à expiration du compteur, un message (par exemple une commande RETRY comme expliqué plus loin) visant à la désactivation du (premier) profil (par exemple un message visant à l'activation du second profil) est transmis du serveur de gestion du réseau de télécommunication au microcircuit.

Selon une seconde possibilité (compatible avec le premier mode de réalisation comme avec le second mode de réalisation), le mécanisme de temporisation est un compteur déclenché par le microcircuit à réception de la réponse indicative de l'existence d'une situation critique. Ce compteur est par exemple initialisé à la valeur représentée par la donnée comprise dans la réponse indicative de l'existence d'une situation critique.

Comme déjà indiqué, le procédé peut comprendre une étape préalable d'émission par le dispositif d'un appel d'urgence sur le réseau de communication en utilisant les (premières) données de connexion associées au (premier) profil. Dans les modes de réalisation décrits, cet appel d'urgence initie la situation d'urgence.

Le réseau de communication est par exemple un réseau de téléphonie mobile, comme dans l'exemple décrit ci-après. En variante, il pourrait s'agir d'un réseau filaire, utilisant par exemple la technique des courants porteurs en ligne (CPL).

L'invention propose également un dispositif comprenant un module de communication sur un réseau de communication et équipé d'un microcircuit mémorisant des données de connexion utilisées par le module de communication et associées à un profil, caractérisé en ce qu'il comprend des moyens de réception, par le microcircuit et via le module de communication, d'une demande visant la désactivation, des moyens d'émission par le microcircuit d'un premier message à destination du dispositif, des moyens d'émission, par le dispositif et à destination du microcircuit, d'une réponse indicative de l'existence d'une situation critique, des moyens conçus pour mettre en place, suite à la réception de ladite réponse par le microcircuit, un mécanisme de temporisation, et des moyens d'émission, par le microcircuit à expiration de la temporisation et à destination du dispositif, d'un second message entraînant la désactivation du profil.

L'invention propose enfin un microcircuit destiné à équiper un dispositif comprenant un module de communication sur un réseau de communication, le microcircuit mémorisant des données de connexion utilisées par le module de communication et associées à un profil, caractérisé en ce qu'il comprend des moyens de réception, via le module de communication, d'une demande visant la désactivation du profil, des moyens d'émission d'un premier message à destination du dispositif, des moyens de réception d'une réponse indicative de l'existence d'une situation critique, des moyens conçus pour mettre en place, suite à la réception de ladite réponse, un mécanisme de temporisation, et des moyens d'émission, à expiration de la temporisation et à destination du dispositif, d'un second message entraînant la désactivation du profil.

Ce dispositif et ce microcircuit peuvent également comporter certaines au moins des caractéristiques optionnelles présentées ci-dessus en termes de procédé.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente les éléments principaux d'un système dans lequel peut être mise en oeuvre la présente invention ;
- la figure 2 représente un premier exemple de procédé de basculement de profil demandé lors d'une situation d'urgence, conformément aux enseignements de l'invention ;
- la figure 3 représente un second exemple de procédé de basculement de profil demandé lors d'une situation d'urgence, conformément aux enseignements de l'invention ; et
- la figure 4 représente un troisième exemple de procédé de basculement de profil demandé lors d'une situation d'urgence, conformément aux enseignements de l'invention.

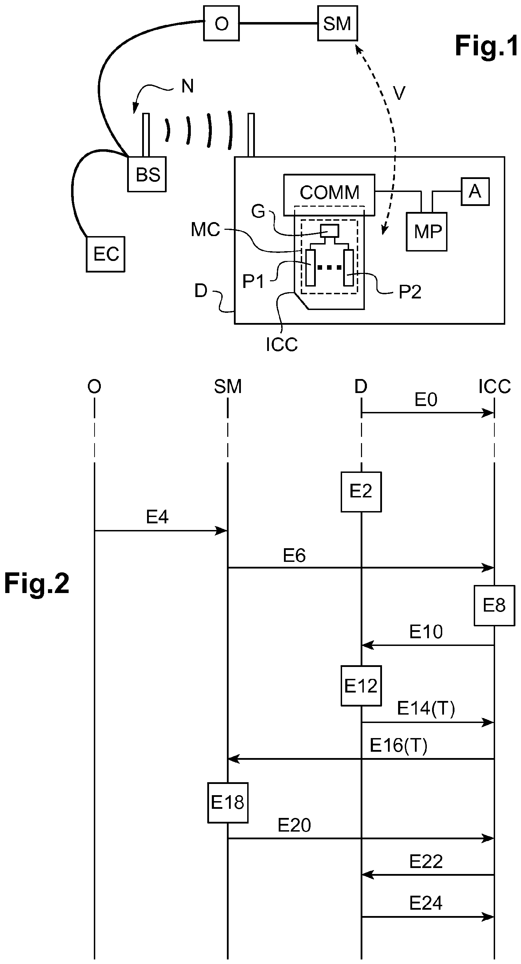

La figure 1 représente schématiquement les éléments principaux d'un système dans lequel peut être mise en oeuvre l'invention.

Ce système comprend un dispositif D, par exemple un véhicule équipé d'un système d'appel d'urgence, qui comporte notamment un microprocesseur MP, un déclencheur d'alerte A, un module de communication COMM et une carte à microcircuit ICC. La carte à microcircuit ICC est reliée au module de communication COMM (qui assure ainsi la fonction de lecteur de la carte à microcircuit ICC) ; le module de communication COMM et le déclencheur d'alerte A sont par exemple chacun reliés au microprocesseur MP et peuvent ainsi échanger des données avec ce microprocesseur MP. La carte à microcircuit ICC peut échanger des données avec le microprocesseur MP à travers le module de communication COMM. Le module de communication est par exemple un microcircuit autonome présent dans une interface réseau qui gère toutes les fonctions radio du dispositif D (par exemple pour échange de données sur un réseau local sans fil, sur un réseau de téléphonie mobile comme décrit ci-après, *etc.*)*.*

La carte à microcircuit ICC est par exemple intégrée (en pratique soudée) au dispositif D. Il s'agit ici d'une carte à microcircuit du type eUICC (pour "*embedded Universal Integrated Circuit Card*")*.* En variante, on pourrait utiliser un autre type de composant sécurisé soudé, tel qu'un eSE (pour *"embedded Secure Element*")*.* En variante, l'élément sécurisé (dans l'exemple ci-dessus une eUICC) pourrait être une carte à microcircuit amovible (ou UICC pour "*Universal Integrated Circuit Card*") ou un circuit intégré sécurisé (ou SE pour *"Secure Element*")*.*

La carte à microcircuit ICC comprend un microcircuit MC qui inclut notamment un microprocesseur, une mémoire vive et une mémoire non-volatile réinscriptible, qui lui permettent de réaliser notamment les fonctions d'un gestionnaire de plateforme G conçu pour gérer (notamment activer ou désactiver) des profils P1, P2 mémorisés dans la carte à microcircuit ICC.

Le gestionnaire de plateforme G et les profils P1, P2 sont par exemple contenus dans des domaines de sécurité (en anglais *"Security Domains"*) tels que définis dans les spécifications techniques *GlobalPlatform,* en particulier la spécification *GlobalPlatform Card Specification 2.2* ; ces domaines de sécurité sont associés au gestionnaire d'abonnement SM mentionné plus bas.

On remarque ici que les profils P1, P2 sont installés sur la carte à microcircuit (puis éventuellement mis à jour) au moyen d'un gestionnaire de profil dédié (non représenté), distinct du gestionnaire de plateforme G.

Chaque profil P1, P2 comprend des données de connexion sur un réseau de télécommunication N. Le réseau de télécommunication N est par exemple un réseau de téléphonie mobile. Les données de connexion d'un profil P1, P2 sont spécifiques au profil concerné ; autrement dit, deux profils distincts P1, P2 ont des données de connexion distinctes. Ces données de connexion incluent notamment un numéro d'abonné (par exemple du type MSISDN pour *"Mobile Station ISDN Number"*) et des clés cryptographiques utilisables pour établir et/ou pour chiffrer une communication à travers le réseau de télécommunication N.

Le réseau de télécommunication N permet par exemple des communications vocales et/ou des échanges de données conformément à un ou plusieurs des protocoles suivants : GSM, GPRS, EDGE, 3G, LTE, LTE-Advanced, 4G.

L'exemple décrit ici se place dans le cadre de la téléphonie mobile ; l'invention est toutefois applicable dans d'autres cadres, par exemple sur des réseaux de communication filaires ou à base de fibres optiques.

Le module de communication COMM peut établir une communication sur le réseau de télécommunication N en utilisant les données de connexion d'un profil P1, P2 présent sur la carte à microcircuit ICC.

Le dispositif D peut ainsi entrer en communication avec un autre abonné connecté au réseau N, par exemple un centre d'appel d'urgence EC. On remarque que la situation qui vient d'être décrite peut résulter d'un appel du dispositif D à destination du centre d'appel d'urgence EC (identifié par un numéro unique, par exemple 112 pour l'Union Européenne) ou d'un appel du centre d'appel d'urgence EC au dispositif D (souvent un rappel du centre d'appel d'urgence EC suite à un premier appel ou message émis du dispositif D au centre d'appel d'urgence EC). Une telle communication utilise par exemple une liaison radio entre le dispositif D et une station de base BS du réseau de télécommunication N, puis des connexions filaires du réseau de télécommunication N entre la station de base BS et le centre d'appel d'urgence EC.

Le dispositif D est généralement équipé d'une interface (par exemple un microphone et un haut-parleur, ainsi qu'éventuellement un clavier et des boutons correspondant à des instructions prédéfinies) qui permettent à un utilisateur du dispositif D d'échanger avec les personnels du centre d'appel d'urgence EC au moyen de la communication préalablement établie.

Sur la figure 1, on a représenté par la référence O un serveur central de l'opérateur du réseau N et par la référence SM un gestionnaire d'abonnement. Ces entités sont décrites dans la présente description comme des entités séparées du fait de leur rôle fonctionnel différent. On remarque toutefois qu'elles pourraient être réalisées au sein d'une même entité physique (tel qu'un serveur).

Le gestionnaire d'abonnement SM peut entrer en communication avec la carte à microcircuit ICC, en particulier avec le gestionnaire de plateforme G, par exemple par l'utilisation d'un protocole de type STK (pour *"SIM Application Toolkit*") sur la liaison de téléphonie mobile fournie par le réseau de télécommunication N. Un canal virtuel V, éventuellement sécurisé, est alors établi entre le gestionnaire de plateforme G (embarqué dans la carte à microcircuit ICC) et le gestionnaire d'abonnement SM.

Le déclencheur d'alerte A est par exemple un bouton poussoir enfoncé par l'utilisateur du dispositif D en cas d'accident. En variante, il pourrait s'agir d'un capteur (par exemple un accéléromètre) conçu pour émettre un signal lorsqu'une forte décélération est détectée, ce qui est indicatif d'un freinage brutal et probablement d'un accident. Un tel capteur peut d'ailleurs être aussi utilisé pour le déclenchement d'un autre système de sécurité, par exemple un coussin de sécurité gonflable (ou *"airbag"* selon l'appellation usuelle). On peut prévoir en outre qu'un indicateur visuel (tel qu'un témoin lumineux ou un affichage d'une icône particulière sur un écran) soit alors activé.

Dans tous les cas, lorsque le déclencheur d'alerte A émet un signal à destination du microprocesseur MP du dispositif D, le microprocesseur MP commande le module de communication COMM afin que le dispositif D se connecte au réseau de télécommunication N avec les données de communication du profil actif (par exemple le profil P1) et émette un appel d'urgence à destination du centre d'appel d'urgence EC. Un tel appel d'urgence permet l'émission de données (par exemple de géolocalisation du dispositif D) et/ou un échange vocal entre le personnel du centre d'appel d'urgence EC et l'utilisateur du dispositif D. Il s'agit par exemple d'un appel d'urgence tel que prévu par l'initiative dénommée "*eCall*"*.* Les données de géolocalisation mentionnées ci-dessus sont par exemple des coordonnées GPS (pour *"Global Positioning System"*) ou des données obtenues par triangulation en utilisant le réseau cellulaire.

Il est souhaitable dans cette situation que le centre d'appel d'urgence EC puisse contacter à nouveau le dispositif D en utilisant le numéro de téléphone attribué à l'abonné (numéro d'abonné mentionné ci-dessus) selon le profil P1 (profil utilisé par le dispositif D lors de l'appel initial qui vient d'être mentionné) pendant toute la durée supposée de traitement du problème (ici l'accident), par exemple pendant une durée prédéterminée (éventuellement définie par des textes normatifs) ; on peut prévoir que cette durée prédéterminée soit comprise entre une heure et un jour. Dans l'exemple décrit ici, la durée prédéterminée est égale à une heure.

La figure 2 représente un premier exemple de procédé de basculement de profil demandé lors d'une telle situation d'urgence, conformément aux enseignements de l'invention.

Comme cela ressortira de la description qui suit, ce procédé est adapté à tenir compte de l'existence d'une situation d'urgence initiée par l'émission d'un appel d'urgence comme cela vient d'être décrit.

On propose donc que le profil de terminal (ou *"Terminal Profile"*) caractérisant le dispositif D inclut une information indiquant que le dispositif D est conçu pour émettre un appel d'urgence (information représentée par exemple par un bit du 32^{ème} octet du profil de terminal défini dans la spécification technique ETSI TS 102 223, tel que le bit b1 de cet octet). Ce profil de terminal est transmis du dispositif D à la carte à microcircuit ICC lors d'une étape E0, réalisée par exemple lors de la mise sous tension du dispositif D.

On considère alors la situation où le déclencheur d'alerte A entraîne l'émission d'un appel d'urgence par le module de communication COMM (étape E2) en utilisant le profil P1, comme indiqué ci-dessus. Comme déjà expliqué, il est souhaitable que le dispositif D puisse être contacté par le centre d'appel d'urgence EC pendant une durée prédéterminée (qui correspond au temps de traitement de la situation d'urgence) et en utilisant le numéro d'abonné du dispositif D (associé au profil P1) reçu par le centre d'appel d'urgence EC lors de l'appel d'urgence de l'étape E2.

On s'intéresse ici au cas où l'activation d'un nouveau profil P2 est alors demandée par l'opérateur, par l'émission, par le serveur de l'opérateur O, d'un message d'activation de profil à destination du gestionnaire d'abonnement SM (étape E4).

À réception de ce message, le gestionnaire d'abonnement SM émet une commande d'activation de profil (étape E6) à destination de la carte à microcircuit ICC, précisément du gestionnaire de plateforme G (ici sous forme de commande STK comme déjà indiqué). Cette étape inclut par exemple un processus d'authentification mutuelle entre le gestionnaire de plateforme G et le gestionnaire d'abonnement SM.

À réception de cette commande d'activation de profil, la carte à microcircuit ICC prépare le changement de profil lors d'une étape E8. Cette étape inclut par exemple le téléchargement de certaines données au moins du nouveau profil.

Le changement de profil n'est toutefois pas effectif tant que la carte n'a pas été réinitialisée (c'est-à-dire ici mise hors tension, puis à nouveau sous tension). On peut éventuellement utiliser un drapeau, mémorisé par exemple dans la mémoire non-volatile réinscriptible de la carte à microcircuit ICC, qui indique que le changement de profil a été préparé (c'est-à-dire que l'étape E8 a été réalisée), mais n'est pas effectif.

La carte à microcircuit ICC envoie alors au dispositif D une demande de mise à jour des informations de la carte à microcircuit ICC utilisées par le dispositif (étape E10), par exemple une commande "*REFRESH*" telle que définie dans la spécification technique ETSI TS 102 223, ici en mode réinitialisation, c'est-à-dire représentant une demande de réinitialisation de la carte à microcircuit ICC par le dispositif D.

Le dispositif D reçoit la demande de mise à jour avec réinitialisation de la carte à microcircuit ICC. S'il n'y avait pas de situation d'urgence en cours, le dispositif D commanderait la réinitialisation de la carte à microcircuit ICC.

On suppose toutefois dans le cas représenté à la figure 2 que le traitement de la situation d'urgence est en cours, c'est-à-dire que le temps écoulé depuis l'émission de l'appel d'urgence à l'étape E2 est inférieur à la durée prédéterminée de traitement de la situation d'urgence, ce que le dispositif D est capable de déterminer à l'étape E12.

Le dispositif D émet alors à destination de la carte à microcircuit ICC un message de rejet de la demande, indicatif de l'état de traitement de la situation d'urgence (étape E14), sans procéder à une réinitialisation de la carte à microcircuit ICC comme demandé par le message de l'étape E10. On prévoit ici que ce message indicatif de l'état de traitement inclut en outre une donnée représentative du temps restant T pour le traitement de la situation d'urgence, c'est-à-dire représentative de la différence entre la durée prédéterminée de la situation d'urgence et le temps déjà écoulé depuis l'émission de l'appel d'urgence (différence déterminée par le dispositif D).

La carte à microcircuit ICC envoie alors une notification indicative de l'état de traitement de la situation d'urgence à destination du gestionnaire d'abonnement SM (étape E16), éventuellement accompagnée dans le cas mentionné ci-dessus du temps restant T pour le traitement de la situation d'urgence.

Le gestionnaire d'abonnement SM déclenche alors un compteur (étape E18), ici avec une durée égale au temps restant T reçu dans la notification de l'étape E16. En variante, notamment lorsqu'aucune information sur le temps restant T n'est communiquée avec la notification de l'étape E16, la durée du compteur pourrait être initialisée à une durée prédéterminée (par exemple d'une heure, qui correspond, dans le système décrit ici, à la durée maximale pendant laquelle la situation d'urgence peut être en cours).

À l'expiration du compteur mis en place par le gestionnaire d'abonnement SM, le gestionnaire d'abonnement SM émet à destination de la carte à microcircuit ICC (précisément du gestionnaire de plateforme G mis en oeuvre dans la carte à microcircuit ICC) une commande de nouvelle tentative d'activation de profil (étape E20), par exemple une commande de type RETRY. Cette commande de nouvelle tentative a par exemple un effet identique à la commande d'activation de profil de l'étape E6, sans inclure toutefois de processus d'authentification.

En variante, le gestionnaire d'abonnement SM pourrait émettre à l'étape E20 une nouvelle commande d'activation de profil, identique à celle de l'étape E6.

À réception de la commande de nouvelle tentative (ou de la nouvelle commande d'activation), la carte à microcircuit ICC consulte le drapeau qui indique que le changement de profil a été préparé mais n'est pas effectif. La carte à microcircuit ICC tente donc à nouveau de rendre effectif le changement de profil en envoyant à nouveau à l'étape E22 une demande de mise à jour des informations de la carte à microcircuit ICC utilisées par le dispositif, en mode réinitialisation (commande "*REFRESH*")*,* ce qui correspond comme déjà indiqué à une demande de réinitialisation de la carte à microcircuit ICC par le dispositif D.

La situation d'urgence étant alors terminée (grâce à l'utilisation du compteur à l'étape E18), le dispositif D met en oeuvre la demande de réinitialisation de la carte à microcircuit ICC, en interrompant l'alimentation de la carte à microcircuit ICC, puis en rétablissant cette alimentation et en mettant en oeuvre un processus de démarrage de la carte à microcircuit ICC (étape E24).

Ce processus de démarrage inclut notamment l'activation du nouveau profil P2 au sein de la carte à microcircuit ICC et la communication à la carte à microcircuit ICC du profil de terminal (comme décrit ci-dessus pour l'étape E0).

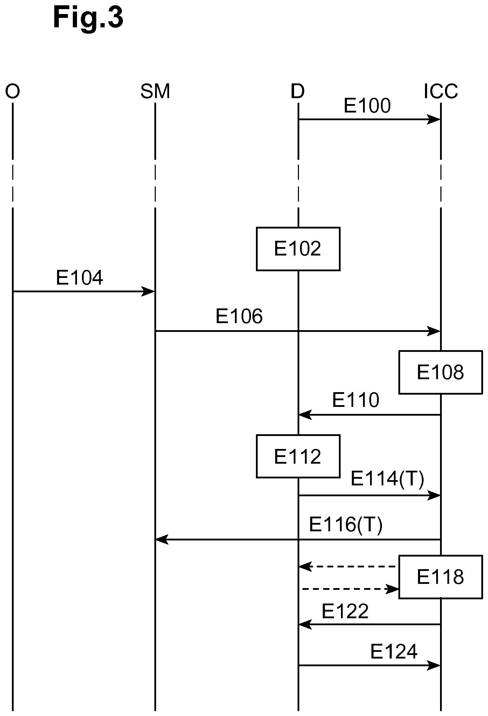

La figure 3 représente un second exemple de procédé de basculement de profil demandé lors d'une situation d'urgence.

Lors d'une étape préalable E100, le profil de terminal est transmis du dispositif D à la carte à microcircuit. Ce profil de terminal inclut par exemple une information indiquant que le dispositif D est conçu pour émettre un appel d'urgence.

À l'étape E102, le déclencheur d'alerte A entraîne l'émission d'un appel d'urgence par le module de communication COMM en utilisant le profil couramment activé (ici P1): l'appel d'urgence est émis sur le réseau de télécommunication N en utilisant les données de connexion associées au profil couramment activé P1.

Comme dans le premier mode de réalisation décrit en référence à la figure 2, on s'intéresse au cas où l'activation d'un nouveau profil P2 est alors demandée par l'opérateur, par l'émission à l'étape E104 d'un message d'activation de profil, depuis le serveur de l'opérateur O et à destination du gestionnaire d'abonnement SM.

À réception de ce message, le gestionnaire d'abonnement SM émet une commande d'activation de profil (étape E106) à destination du gestionnaire de plateforme G mis en oeuvre par la carte à microcircuit ICC. Cette étape inclut par exemple un processus d'authentification mutuelle entre le gestionnaire de plateforme G et le gestionnaire d'abonnement SM.

À réception de cette commande d'activation de profil, la carte à microcircuit ICC prépare le changement de profil lors d'une étape E108.

Comme précédemment, le changement de profil n'est toutefois pas effectif tant que la carte n'a pas été réinitialisée ; on peut prévoir qu'un drapeau, mémorisé par exemple dans la mémoire non-volatile réinscriptible de la carte à microcircuit ICC, indique que le changement de profil a été préparé (c'est-à-dire que l'étape E8 a été réalisée), mais n'est pas effectif.

La carte à microcircuit ICC envoie alors au dispositif D à l'étape E110 une demande de mise à jour des informations de la carte à microcircuit ICC utilisées par le dispositif. Comme dans le premier mode de réalisation, il s'agit par exemple d'une commande "*REFRESH*" en mode réinitialisation, c'est-à-dire représentant une demande de réinitialisation de la carte à microcircuit ICC par le dispositif D.

Le dispositif D reçoit la demande de mise à jour avec réinitialisation de la carte à microcircuit ICC.

Lorsque la situation d'urgence est en cours au moment où le dispositif D reçoit la demande de mise à jour, c'est-à-dire que le dispositif D détermine à l'étape E112 que le temps écoulé depuis l'émission de l'appel d'urgence à l'étape E102 est inférieur à la durée prédéterminée de traitement de la situation d'urgence, le dispositif D émet à destination de la carte à microcircuit ICC un message de rejet de la demande, indicatif de l'état de traitement de la situation d'urgence (étape E114), sans procéder à une réinitialisation de la carte à microcircuit ICC comme demandé par le message de l'étape E110.

Comme déjà indiqué dans le premier mode de réalisation, on peut prévoir ici que ce message indicatif de l'état de traitement inclut en outre une donnée représentative du temps restant T pour le traitement de la situation d'urgence, c'est-à-dire représentative de la différence entre la durée prédéterminée de la situation d'urgence et le temps déjà écoulé depuis l'émission de l'appel d'urgence (différence déterminée par le dispositif D).

Selon un mode de réalisation envisageable, la carte à microcircuit ICC peut alors envoyer une notification indicative de l'état de traitement de la situation d'urgence à destination du gestionnaire d'abonnement SM (étape E116), éventuellement accompagnée dans le cas mentionné ci-dessus du temps restant T pour le traitement de la situation d'urgence.

La carte à microcircuit ICC déclenche alors en outre un compteur (étape E118), ici avec une durée égale au temps restant T reçu dans le message de rejet de l'étape E114. En variante, notamment lorsqu'aucune information sur le temps restant T n'est communiquée avec le message de l'étape E114, la durée du compteur pourrait être initialisée à une durée prédéterminée (par exemple d'une heure, qui correspond à la durée maximale pendant laquelle la situation d'urgence peut être en cours).

Le compteur déclenché par la carte à microcircuit ICC peut être situé physiquement en dehors de la carte à microcircuit ICC : le compteur est par exemple situé au sein du dispositif D, précisément au sein du microprocesseur MP ou du module de communication COMM, comme c'est le cas si la carte à microcircuit ICC utilise la commande TIMER MANAGEMENT décrite dans la spécification technique ETSI TS 102 223. En variante, on peut par exemple utiliser la commande STATUS définie dans la même spécification technique afin que la carte reçoive périodiquement (avec une période déterminée) une instruction de réveil, ce qui permet à la carte à microcircuit ICC de mesurer l'écoulement du temps.

À l'expiration du compteur déclenché par la carte à microcircuit ICC (c'est-à-dire par exemple à réception, en provenance du dispositif D, d'un message signifiant l'expiration du compteur déclenché à l'étape E118), la carte à microcircuit ICC consulte le drapeau qui indique que le changement de profil a été préparé mais n'est pas effectif. La carte à microcircuit ICC tente alors à nouveau de rendre effectif le changement de profil en envoyant à nouveau à l'étape E122 une demande de mise à jour des informations de la carte à microcircuit ICC utilisées par le dispositif (commande *"REFRESH*") en mode réinitialisation, ce qui correspond comme déjà indiqué à une demande de réinitialisation de la carte à microcircuit ICC par le dispositif D.

La situation d'urgence étant alors terminée (grâce à l'utilisation du compteur à l'étape E118), le dispositif D met en oeuvre la demande de réinitialisation de la carte à microcircuit ICC, en interrompant l'alimentation de la carte à microcircuit ICC, puis en rétablissant cette alimentation et en mettant en oeuvre un processus de démarrage de la carte à microcircuit ICC (étape E124).

Ce processus de démarrage inclut notamment l'activation du nouveau profil P2 au sein de la carte à microcircuit ICC et la communication à la carte à microcircuit ICC du profil de terminal (comme décrit ci-dessus pour l'étape E100).

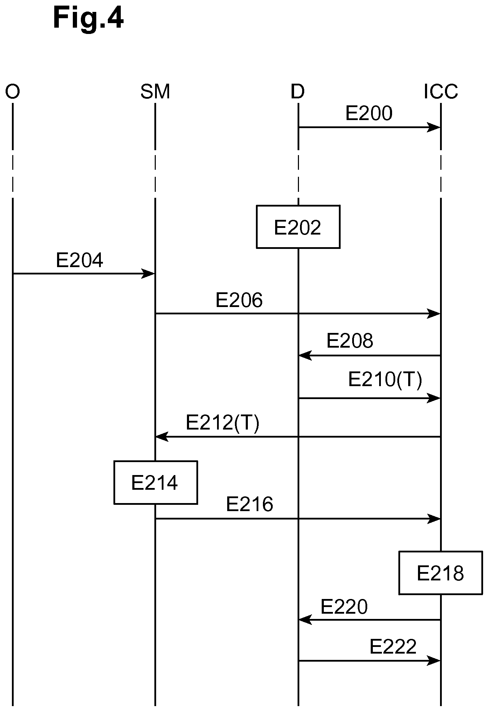

La figure 4 représente un troisième exemple de procédé de basculement de profil demandé lors d'une situation d'urgence.

Lors d'une étape préalable E200, un profil de terminal, incluant notamment une information indiquant que le dispositif D est conçu pour émettre un appel d'urgence, est transmis du dispositif D à la carte à microcircuit ICC.

À l'étape E202, le déclencheur d'alerte A entraîne l'émission d'un appel d'urgence par le module de communication COMM en utilisant le profil couramment activé (ici P1).

Comme dans les modes de réalisation précédemment décrits, on s'intéresse au cas où l'activation d'un nouveau profil P2 est alors demandée par l'opérateur, par l'émission, par le serveur de l'opérateur O, d'un message d'activation de profil à destination du gestionnaire d'abonnement SM (étape E204).

À réception de ce message, le gestionnaire d'abonnement SM émet une commande d'activation de profil (étape E206) à destination du gestionnaire de plateforme G mis en oeuvre par la carte à microcircuit ICC. Cette étape inclut par exemple un processus d'authentification mutuelle entre le gestionnaire de plateforme G et le gestionnaire d'abonnement SM.

À réception de cette commande d'activation de profil, la carte à microcircuit ICC consulte le profil de terminal (reçu à l'étape E200) afin de déterminer si le dispositif D est conçu pour émettre un appel d'urgence. Dans l'affirmative (comme c'est le cas dans l'exemple décrit ici), la carte à microcircuit ICC émet alors à l'étape E208 une commande proactive à destination du dispositif D afin d'interroger le dispositif D sur l'existence d'une situation d'urgence en cours. Une telle commande est par exemple un nouveau type de commande dédié, qui respecte par ailleurs le format STK.

Le dispositif D envoie alors à l'étape E210 une réponse indiquant si une situation d'urgence est en cours ou non, et comprenant en outre éventuellement des données représentatives de la durée de temps T restant avant la fin de la situation d'urgence. Comme déjà indiqué, ce temps restant T peut en effet être calculé par le dispositif D par différence entre l'heure courante (heure de réception de la commande proactive de l'étape E208) et l'heure d'émission de l'appel d'urgence (étape E202). On peut prévoir par exemple que la réponse soit constituée uniquement par la donnée représentative du temps restant T, exprimé selon un mode de réalisation envisageable en minutes, une donnée représentant une valeur nulle signifiant qu'il n'y a pas de situation d'urgence en cours.

On remarque que, lorsque le profil de terminal indique que le dispositif D n'est pas conçu pour émettre un appel d'urgence ou que la réponse reçue à l'étape E210 indique qu'aucune situation d'urgence n'est en cours, on peut procéder directement à l'étape E218 de préparation du changement de profil décrite plus loin.

Lorsque la réponse reçue à l'étape E210 indique qu'une situation d'urgence est en cours, la carte à microcircuit ICC envoie une notification indicative de l'état de situation d'urgence à destination du gestionnaire d'abonnement SM (étape E212), éventuellement accompagnée dans le cas mentionné ci-dessus du temps restant T pour le traitement de la situation d'urgence.

Le gestionnaire d'abonnement SM déclenche alors un compteur (étape E214), ici avec une durée égale au temps restant T reçu dans la notification de l'étape E212. En variante, notamment lorsqu'aucune information sur le temps restant T n'est communiquée avec la notification de l'étape E212, la durée du compteur pourrait être initialisée à une durée prédéterminée (par exemple d'une heure, qui correspond, pour le système décrit ici, à la durée maximale pendant laquelle la situation d'urgence peut être en cours).

À l'expiration du compteur mis en place par le gestionnaire d'abonnement SM, le gestionnaire d'abonnement SM émet à destination de la carte à microcircuit ICC (précisément du gestionnaire de plateforme G mis en oeuvre dans la carte à microcircuit ICC) une commande de nouvelle tentative d'activation de profil (étape E216). Cette commande de nouvelle tentative a par exemple un effet identique à la commande d'activation de profil de l'étape E206, sans inclure toutefois de processus d'authentification.

À réception de cette commande de nouvelle tentative d'activation de profil, la carte à microcircuit ICC prépare le changement de profil lors d'une étape E218. On peut prévoir qu'avant de préparer le changement de profil, la carte à microcircuit ICC vérifie qu'aucune situation d'urgence n'est en cours, par exemple selon le processus décrit ci-dessus (étapes E208 et E210).

Le changement de profil n'est toutefois pas effectif tant que la carte n'a pas été réinitialisée.

La carte à microcircuit ICC envoie alors au dispositif D une demande de mise à jour des informations de la carte à microcircuit ICC utilisées par le dispositif (étape E220), par exemple une commande "*REFRESH*"*,* ici en mode réinitialisation, c'est-à-dire représentant une demande de réinitialisation de la carte à microcircuit ICC par le dispositif D.

Le dispositif D reçoit la demande de mise à jour avec réinitialisation de la carte à microcircuit ICC et met en oeuvre cette demande de réinitialisation de la carte à microcircuit ICC, en interrompant l'alimentation de la carte à microcircuit ICC, puis en rétablissant cette alimentation et en mettant en oeuvre un processus de démarrage de la carte à microcircuit ICC (étape E222).

Ce processus de démarrage inclut notamment l'activation du nouveau profil P2 au sein de la carte à microcircuit ICC et la communication à la carte à microcircuit ICC du profil de terminal (comme décrit ci-dessus pour l'étape E200).

Dans le mode de réalisation qui vient d'être décrit, on utilise un compteur déclenché par le gestionnaire d'abonnement SM à réception de la notification de l'étape E212, comme dans le premier mode de réalisation décrit ci-dessus en référence à la figure 2. Selon une variante envisageable, on pourrait utiliser un compteur déclenché par la carte à microcircuit ICC, comme dans le second mode de réalisation décrit ci-dessus en référence à la figure 3, ici à réception de la réponse de l'étape E210 ; dans ce cas, l'étape de préparation du changement de profil est effectuée à l'expiration du compteur déclenché par la carte à microcircuit.

## Revendications

1. Procédé de modification de profil dans un dispositif (D) comprenant un module de communication (COMM) sur un réseau de communication (N), le dispositif (D) étant équipé d'un microcircuit (MC) mémorisant des données de connexion utilisées par le module de communication (COMM) et associées à un profil (P1), **caractérisé en ce qu'**il comprend les étapes suivantes :
- réception, par le microcircuit (MC) et via le module de communication (COMM), d'une demande visant la désactivation (E6 ; E106 ; E206) du profil (P1) ;
- émission par le microcircuit (MC) d'un premier message (E10 ; E110 ; E208) à destination du dispositif (D) ;
- émission, par le dispositif (D) et à destination du microcircuit (MC), d'une réponse (E14 ; E114; E210) indicative de l'existence d'une situation critique ;
- suite à la réception de ladite réponse (E14; E114; E210) par le microcircuit (MC), mise en place d'un mécanisme de temporisation (E18 ; E118 ; E214) ;
- à expiration de la temporisation (E18 ; E118 ; E214), émission, par le microcircuit (MC) et à destination du dispositif (D), d'un second message (E22 ; E122 ; E220) entraînant la désactivation du profil (P1).

2. Procédé de modification de profil selon la revendication 1, dans lequel la réponse (E14 ; E114 ; E210) indicative de l'existence d'une situation critique contient une donnée (T) représentative d'une durée restante de la situation critique.

3. Procédé de modification de profil selon la revendication 1 ou 2, dans lequel le premier message (E208) est une commande proactive d'interrogation sur l'existence d'une situation critique.

4. Procédé de modification de profil selon la revendication 3, dans lequel une étape de préparation de la modification de profil (E218) est mise en oeuvre par le microcircuit (MC) après expiration de la temporisation (E214).

5. Procédé de modification de profil selon la revendication 1 ou 2, dans lequel le premier message (E10 ; E110) est une demande de mise à jour des informations du microcircuit (MC) utilisées par le dispositif (D).

6. Procédé de modification de profil selon la revendication 5, dans lequel une étape de préparation de la modification de profil (E8 ; E108) est mise en oeuvre par le microcircuit (MC) à réception de la demande de désactivation (E6 ; E106) du profil (P1).

7. Procédé de modification de profil selon la revendication 5 ou 6, dans lequel la réponse (E14 ; E114) indicative de l'existence d'une situation critique est un message de rejet de la demande de mise à jour (E10 ; E110).

8. Procédé de modification de profil selon l'une des revendications 1 à 7, comprenant une étape d'émission, par le microcircuit (MC) et à destination d'un serveur de gestion (SM) du réseau de communication (N), d'un message de notification de la situation critique (E16 ; E116 ; E212).

9. Procédé de modification de profil selon la revendication 8 prise dans la dépendance directe ou indirecte de la revendication 2, dans lequel le message de notification (E16 ; E116; E212) comprend une donnée représentative de ladite durée restante (T).

10. Procédé de modification de profil selon la revendication 8 ou 9, dans lequel le mécanisme de temporisation (E18 ; E214) est un compteur déclenché par le serveur de gestion (SM) du réseau de communication (N) à réception du message de notification (E16 ; E212).

11. Procédé de modification de profil selon la revendication 10 prise dans la dépendance de la revendication 9, dans lequel le compteur est initialisé à la valeur représentée par la donnée comprise dans le message de notification (E16 ; E212).

12. Procédé de modification de profil selon la revendication 10 ou 11, dans lequel, à expiration du compteur, un message (E20 ; E216) visant à la désactivation du profil (P1) est transmis du serveur de gestion (SM) du réseau de communication (N) au microcircuit (MC).

13. Procédé de modification de profil selon l'une des revendications 1 à 9, dans lequel le mécanisme de temporisation (E118) est un compteur déclenché par le microcircuit (MC) à réception de la réponse (E114) indicative de l'existence d'une situation critique.

14. Procédé de modification de profil selon la revendication 13 prise dans la dépendance directe ou indirecte de la revendication 2, dans lequel le compteur est initialisé à la valeur représentée par la donnée (T) comprise dans la réponse (E114) indicative de l'existence d'une situation critique.

15. Procédé de modification de profil selon l'une des revendications 1 à 14, comprenant une étape préalable (E2 ; E102 ; E202) d'émission par le module de communication (COMM) d'un appel d'urgence en utilisant les données de connexion associées au profil (P1).

16. Dispositif (D) comprenant un module de communication (COMM) sur un réseau de communication (N) et équipé d'un microcircuit (MC) mémorisant des données de connexion utilisées par le module de communication (COMM) et associées à un profil (P1), **caractérisé en ce qu'**il comprend :
- des moyens de réception, par le microcircuit (MC) et via le module de communication (COMM), d'une demande visant la désactivation (E6 ; E106 ; E206) du profil (P1) ;
- des moyens d'émission par le microcircuit (MC) d'un premier message (E10 ; E110 ; E208) à destination du dispositif (D) ;
- des moyens d'émission, par le dispositif (D) et à destination du microcircuit (MC), d'une réponse (E14 ; E114; E210) indicative de l'existence d'une situation critique ;
- des moyens conçus pour mettre en place, suite à la réception de ladite réponse (E14 ; E114; E210) par le microcircuit (MC), un mécanisme de temporisation (E18 ; E118 ; E214) ;
- des moyens d'émission, par le microcircuit (MC) à expiration de la temporisation (E18 ; E118 ; E214) et à destination du dispositif (D), d'un second message (E22 ; E122 ; E220) entraînant la désactivation du profil (P1).

17. Microcircuit (MC) destiné à équiper un dispositif (D) comprenant un module de communication (COMM) sur un réseau de communication (N), le microcircuit (MC) mémorisant des données de connexion utilisées par le module de communication (COMM) et associées à un profil (P1), **caractérisé en ce qu'**il comprend :
- des moyens de réception, via le module de communication (COMM), d'une demande visant la désactivation (E6 ; E106 ; E206) du profil (P1) ;
- des moyens d'émission d'un premier message (E10 ; E110 ; E208) à destination du dispositif (D) ;
- des moyens de réception d'une réponse (E14 ; E114 ; E210) indicative de l'existence d'une situation critique ;
- des moyens conçus pour mettre en place, suite à la réception de ladite réponse (E14 ; E114; E210), un mécanisme de temporisation (E18 ; E118; E214) ;
- des moyens d'émission, à expiration de la temporisation (E18 ; E118 ; E214) et à destination du dispositif (D), d'un second message (E22 ; E122 ; E220) entraînant la désactivation du profil (P1).

## Patentansprüche

1. Verfahren für Profiländerung in einer Vorrichtung (D), die ein Modul (COMM) für eine Kommunikation auf einem Kommunikationsnetz (N) aufweist, wobei die Vorrichtung (D) mit einem Mikroschaltkreis (MC) ausgestattet ist, der vom Kommunikationsmodul (COMM) verwendete und einem Profil (P1) zugeordnete Verbindungsdaten speichert,
**dadurch gekennzeichnet, daß** es die folgenden Schritte aufweist:
- Empfang, durch den Mikroschaltkreis (MC) und über das Kommunikationsmodul (COMM), einer die Deaktivierung (E6; E106; E206) des Profils (P1) betreffenden Aufforderung,
- Aussendung, durch den Mikroschaltkreis (MC), einer ersten Nachricht (E10; E110; E208) an die Vorrichtung (D),
- Aussendung, durch die Vorrichtung (D) und an den Mikroschaltkreis (MC), einer Antwort (E14; E114; E210), die das Vorliegen einer kritischen Situation anzeigt,
- Ingangsetzen eines Verzögerungsmechanismus (E18; E118; E214) in Folge des Empfangens der Antwort (E14; E114; E210) durch den Mikroschaltkreis (MC),
- nach Ablauf der Verzögerung (E18; E118; E214): Aussenden, durch den Mikroschaltkreis (MC) und an die Vorrichtung (D), einer zweiten Nachricht (E22; E122; E220), die die Deaktivierung des Profils (P1) bewirkt.

2. Verfahren für Profiländerung gemäß Anspruch 1, bei dem die Antwort (E14; E114; E210), die anzeigt, daß eine kritische Situation vorliegt, eine Angabe (T) enthält, die für eine restliche Dauer der kritischen Situation steht.

3. Verfahren für Profiländerung gemäß Anspruch 1 oder 2, bei dem die erste Nachricht (E208) ein proaktiver Abfragebefehl über das Vorliegen einer kritischen Situation ist.

4. Verfahren für Profiländerung gemäß Anspruch 3, bei dem durch den Mikroschaltkreis (MC) nach Ablauf der Verzögerung (E214) ein Schritt der Vorbereitung der Änderung (E218) des Profils durchgeführt wird.

5. Verfahren für Profiländerung gemäß Anspruch 1 oder 2, bei dem die erste Nachricht (E10; E110) eine Aufforderung zur Aktualisierung der Informationen des von der Vorrichtung (D) verwendeten Mikroschaltkreises (MC) ist.

6. Verfahren für Profiländerung gemäß Anspruch 5, bei dem durch den Mikroschaltkreis (MC) bei Empfang der Aufforderung zum Deaktivieren (E6; E106) des Profils (1) ein Schritt der Vorbereitung der Änderung (E8; E108) des Profils durchgeführt wird.

7. Verfahren für Profiländerung gemäß Anspruch 5 oder 6, bei dem die Antwort (E14; E114), die das Vorliegen einer kritischen Situation anzeigt, eine Nachricht der Zurückweisung der Aufforderung zur Aktualisierung (E10; E110) ist.

8. Verfahren für Profiländerung gemäß einem der Ansprüche 1 bis 7, das einen Schritt des Aussendens einer Nachricht mit der Anzeige der kritischen Situation (E16; E116; E212) durch den Mikroschaltkreis (MC) und an einen Management-Server (SM) des Kommunikationsnetzes (N) aufweist.

9. Verfahren für Profiländerung gemäß Anspruch 8 in direkter oder indirekter Abhängigkeit von Anspruch 2, bei dem die Nachricht mit der Anzeige (E16; E116; E212) eine Angabe enthält, die für die restliche Dauer (T) der kritischen Situation steht.

10. Verfahren für Profiländerung gemäß Anspruch 8 oder 9, bei dem der Verzögerungsmechanismus (E18; E214) ein Zähler ist, der durch den Management-Server (SM) des Kommunikationsnetzes (N) bei Empfang der Nachricht mit der Anzeige (E16; E212) ausgelöst wird.

11. Verfahren für Profiländerung gemäß Anspruch 10 in Abhängigkeit von Anspruch 9, bei dem der Zähler bei dem Wert gestartet wird, für den die in der Nachricht mit der Anzeige (E16; E212) enthaltene Angabe steht.

12. Verfahren für Profiländerung gemäß Anspruch 10 oder 11, bei dem bei Ablauf des Zählers vom Management-Server (SM) des Kommunikationsnetzes (N) an den Mikroschaltkreis (MC) eine Nachricht (E20; E216) geschickt wird, die die Deaktivierung des Profils (P1) betrifft.

13. Verfahren für Profiländerung gemäß einem der Ansprüche 1 bis 9, bei dem der Verzögerungsmechanismus (E118) ein Zähler ist, der durch den Mikroschaltkreis (MC) bei Empfang der Nachricht (E114) mit der Anzeige des Vorliegens einer kritischen Situation ausgelöst wird.

14. Verfahren für Profiländerung gemäß Anspruch 13 in direkter oder indirekter Abhängigkeit von Anspruch 2, bei dem der Zähler bei dem Wert gestartet wird, für den die in der Antwort (E114), die das Vorliegen einer kritischen Situation anzeigt, enthaltene Angabe steht.

15. Verfahren für Profiländerung gemäß einem der Ansprüche 1 bis 14, das einen vorausgehenden Schritt (E2; E102; E202) des Aussendens eines Notrufs durch das Kommunikationsmodul (COMM) aufweist, bei dem die Daten der dem Profil (P1) zugeordneten Verbindung verwendet werden.

16. Vorrichtung (D), die ein Modul (COMM) für eine Kommunikation auf einem Kommunikationsnetz (N) aufweist und mit einem Mikroschaltkreis (MC) ausgestattet ist, der vom Kommunikationsmodul (COMM) verwendete und einem Profil (P1) zugeordnete Verbindungsdaten speichert,
**dadurch gekennzeichnet, daß** es
- Mittel zum Empfangen, durch den Mikroschaltkreis (MC) und über das Kommunikationsmodul (COMM), einer die Deaktivierung (E6; E106; E206) des Profils (P1) betreffenden Aufforderung,
- Mittel zum Aussenden, durch den Mikroschaltkreis (MC), einer ersten Nachricht (E10; E110; E208) an die Vorrichtung (D),
- Mittel zum Aussenden, durch die Vorrichtung (D) und an den Mikroschaltkreis (MC), einer Antwort (E14; E114; E210), die das Vorliegen einer kritischen Situation anzeigt,
- Mittel zum Ingangsetzen eines Verzögerungsmechanismus (E18; E118; E214) in Folge des Empfangens der Antwort (E14; E114; E210) durch den Mikroschaltkreis (MC),
- Mittel zum Aussenden, nach Ablauf der Verzögerung (E18; E118; E214), durch den Mikroschaltkreis (MC) und an die Vorrichtung (D), einer zweiten Nachricht (E22; E122; E220), die die Deaktivierung des Profils (P1) bewirkt,
aufweist.

17. Mikroschaltkreis (MC), der dazu bestimmt ist, eine Vorrichtung (D) auszustatten, die ein Modul (COMM) für eine Kommunikation auf einem Kommunikationsnetz (N) aufweist, wobei der Mikroschaltkreis (MC) die vom Kommunikationsmodul (COMM) verwendeten und einem Profil (P1) zugeordneten Verbindungsdaten speichert, **dadurch gekennzeichnet, daß** er
- Mittel zum Empfangen, über das Kommunikationsmodul (COMM), einer die Deaktivierung (E6; E106; E206) des Profils (P1) betreffenden Aufforderung,
- Mittel zum Aussenden einer ersten Nachricht (E10; E110; E208) an die Vorrichtung (D),
- Mittel zum Empfangen einer Antwort (E14; E114; E210), die das Vorliegen einer kritischen Situation anzeigt,
- Mittel zum Ingangsetzen eines Verzögerungsmechanismus (E18; E118; E214) in Folge des Empfangens der Antwort (E14; E114; E210),
- Mittel zum Aussenden, nach Ablauf der Verzögerung (E18; E118; E214), durch den Mikroschaltkreis (MC) und an die Vorrichtung (D), einer zweiten Nachricht (E22; E122; E220), die die Deaktivierung des Profils (P1) bewirkt,
aufweist.

## Claims

1. Profile modification method in a device (D) comprising a communication module (COMM) for communicating on a communication network (N), the device (D) being provided with a microcircuit (MC) storing connection data used by the communication module (COMM) and associated with a profile (P1), **characterized in that** it comprises the following steps:
- reception, by the microcircuit (MC) and via the communication module (COMM), of a request to deactivate (E6; E106; E206) the profile (P1);
- transmission by the microcircuit (MC) of a first message (E10; E110; E208) to the device (D);
- transmission, by the device (D) to the microcircuit (MC), of a response (E14; E114; E210) indicative of the presence of a critical situation;
- following the receipt of said response (E14; E114; E210) by the microcircuit (MC), implementation of a time delay mechanism (E18; E118; E214);
- on expiry of the time delay (E18; E118; E214), transmission, by the microcircuit (MC) to the device (D), of a second message (E22; E122; E220) causing the deactivation of the profile (P1).

2. Profile modification method according to claim 1, wherein the response (E14; E114; E210) indicative of the presence of a critical situation contains a data element (T) representative of a remaining duration of the critical situation.

3. Profile modification method according to claim 1 or 2, wherein the first message (E208) is a proactive command resulting in interrogation about the presence of a critical situation.

4. Profile modification method according to claim 3, wherein a step of preparing the profile modification (E218) is executed by the microcircuit (MC) after expiry of the time delay (E214).

5. Profile modification method according to claim 1 or 2, wherein the first message (E10; E110) is a request for the update of the information on the microcircuit (MC) used by the device (D).

6. Profile modification method according to in claim 5, wherein a step of preparing the profile modification (E8; E108) is executed by the microcircuit (MC) on receipt of the request for deactivation (E6; E106) of the profile (P1).

7. Profile modification method according to claim 5 or 6, wherein the response (E14; E114) indicative of the presence of a critical situation is a message rejecting the updating request (E10; E110).

8. Profile modification method according to one of claims 1 to 7, comprising a step of transmission, by the microcircuit (MC) to an operating server (SM) of the communication network (N), of a message of notification of the critical situation (E16; E116; E212).

9. Profile modification method according to claim 8, considered in direct or indirect dependency on claim 2, wherein the notification message (E16; E116; E212) comprises a data element representative of said remaining duration (T).

10. Profile modification method according to claim 8 or 9, wherein the time delay mechanism (E18; E214) is a counter triggered by the operating server (SM) of the communication network (N) on receipt of the notification message (E16; E212).

11. Profile modification method according to claim 10, considered in dependency on claim 9, wherein the counter is initialized to the value represented by the data element included in the notification message (E16; E212).

12. Profile modification method according to claim 10 or 11, wherein, on expiry of the counter, a message (E20; E216) for the deactivation of the profile (P1) is transmitted from the operating server (SM) of the communication network (N) to the microcircuit (MC).

13. Profile modification method according to one of claims 1 to 9, wherein the time delay mechanism (E118) is a counter triggered by the microcircuit (MC) on receipt of the response (E114) indicative of the presence of a critical situation.

14. Profile modification method according to claim 13, considered in direct or indirect dependency on claim 2, wherein the counter is initialized to the value represented by the data element (T) included in the response (E114) indicative of the presence of a critical situation.

15. Profile modification method according to one of claims 1 to 14, comprising a preliminary step (E2; E102; E202) of transmission of an emergency call by the communication module (COMM), using the connection data associated with the profile (P1).

16. Device (D) comprising a communication module (COMM) for communicating on a communication network (N), the device being provided with a microcircuit (MC) storing connection data used by the communication module (COMM) and associated with a profile (P1), **characterized in that** it comprises:
- means for the reception, by the microcircuit (MC) and via the communication module (COMM), of a request to deactivate (E6; E106; E206) the profile (P1);
- means for the transmission by the microcircuit (MC) of a first message (E10; E110; E208) to the device (D);
- means for the transmission, by the device (D) to the microcircuit (MC), of a response (E14; E114; E210) indicative of the presence of a critical situation;
- means designed to implement, following the receipt of said response (E14; E114; E210) by the microcircuit (MC), a time delay mechanism (E18; E118; E214);
- means for the transmission, by the microcircuit (MC) to the device (D), on expiry of the time delay (E18; E118; E214), of a second message (E22; E122; E220) causing the deactivation of the profile (P1).

17. Microcircuit (MC) intended to be provided in a device (D) comprising a communication module (COMM) for communicating on a communication network (N), the microcircuit (MC) storing connection data used by the communication module (COMM) and associated with a profile (P1), **characterized in that** it comprises:
- means for the reception, via the communication module (COMM), of a request to deactivate (E6; E106; E206) the profile (P1);
- means for the transmission of a first message (E10; E110; E208) to the device (D);
- means for the reception of a response (E14; E114; E210) indicative of the presence of a critical situation;
- means designed to implement, following the receipt of said response (E14; E114; E210), a time delay mechanism (E18; E118; E214);
- means for the transmission to the device (D), on expiry of the time delay (E18; E118; E214), of a second message (E22; E122; E220) causing the deactivation of the profile (P1).
